# EUROPÄISCHE PATENTSCHRIFT

(11) **EP 3 469 237 B1**
(45) Veröffentlichungstag und Bekanntmachung des Hinweises auf die Patenterteilung: **06.01.2021**
(21) Anmeldenummer: 17717731.8
(22) Anmeldetag: 18.04.2017
(51) Int. Cl.: F16J 15/00, F16J 15/34, F16J 15/40

(54) **GLEITRINGDICHTUNGSANORDNUNG SOWIE BOHRLOCH-FÖRDERVORRICHTUNG**
SLIP RING SEAL ARRANGEMENT AND BOREHOLE DELIVERY DEVICE
ENSEMBLE GARNITURE MÉCANIQUE D'ÉTANCHÉITÉ AINSI QUE DISPOSITIF DE POMPAGE POUR PUITS DE FORAGE

(30) Priorität: 09.06.2016 DE 102016210173
(43) Veröffentlichungstag der Anmeldung: 17.04.2019
(73) Patentinhaber: EagleBurgmann Germany GmbH & Co. KG, 82515 Wolfratshausen (DE)
(72) Erfinder: DRÖSCHER, Peter, 82538 Geretsried (DE); PEHL, Andreas, 85586 Poing (DE); PFEIL, Dieter, 82549 Königsdorf (DE); SCHULTEN, Berthold, 82538 Geretsried (DE); SCHMIDT, Glenn, Sugar Land TX 77479 (US); VANHIE, Eric, Houston Texas 77070 (US)
(74) Vertreter: Hoefer & Partner Patentanwälte mbB
(86) Internationale Anmeldenummer: PCT/EP2017/059136
(87) Internationale Veröffentlichungsnummer: WO 2017/211491

(56) Entgegenhaltungen:
- WO-A1-2015/172087
- DE-A1-102013 003 445

## Beschreibung

Die Erfindung betrifft eine Gleitringdichtungsanordnung, welche insbesondere in der Lage ist, an schwer zugänglichen Orten über einen sehr langen Zeitraum, insbesondere mehrere Jahre, betrieben zu werden, sowie eine Bohrloch-Fördervorrichtung zur Förderung von Bohrlöchern mit einer erfindungsgemäßen Gleitringdichtungsanordnung.

Bohrloch-Fördervorrichtungen sind aus dem Stand der Technik in unterschiedlichen Ausgestaltungen bekannt. Derartige Fördervorrichtungen werden beispielsweise in Bohrlöchern verwendet, um Öl oder dgl. zu fördern. Die Bohrloch-Fördervorrichtungen werden hierbei bis nahe einem Grund eines Bohrlochs in das Bohrloch hinabgelassen und pumpen das zu fördernde Medium über eine durch das Bohrloch geführte Leitung zur Oberfläche. Eine hierbei verwendete Pumpe wird üblicherweise mittels eines elektrischen Antriebs angetrieben. Hierbei ergibt sich eine Problematik einer Abdichtung einer Welle, welche den elektrischen Antrieb mit der Pumpe verbindet. Da die Bohrloch-Fördervorrichtung üblicherweise sehr lange verwendet wird, muss eine Abdichtung über einen langen Zeitraum, insbesondere mehrere Jahre, gewährleistet sein, da ein Versagen der Dichtung mit sehr hohem Aufwand für einen Austausch und insbesondere auch mit einem Förderausfall verbunden ist.

Aus der DE 102013003445 A1 ist ferner eine Bohrloch-Fördervorrichtung bekannt, welche zur Abdichtung zwischen einem elektrischen Antrieb und einer Pumpe eine Gleitringdichtung verwendet. Hierbei ist eine autarke Versorgungseinrichtung an der Gleitringdichtung vorgesehen, um einen mehrjährigen Betrieb zu gewährleisten. Diese Bohrloch-Fördervorrichtung hat sich grundsätzlich bewährt, allerdings können bei Auftreten von starken Temperatur- und Druckschwankungen im Bohrloch die gewünschten langjährigen Standzeiten von bis zu fünf Jahren nicht erreicht werden, da das von der autarken Versorgungseinrichtung zur Gleitringdichtung zugeführte Sperrmedium zum Sperren und/oder Schmieren eines Dichtspalts der Gleitringdichtung durch die hohen Temperatur-und Druckunterschiede eine zu hohe Leckage aufweisen kann.

Eine alternative Lösung ist aus der US 2011/0194949 A1 bekannt, bei der eine Gleitringdichtung zur Abdichtung verwendet wird. Hierbei wird mittels eines Federelements und eines Faltenbalgs ein rotierender Gleitring gegen einen Sitzring gepresst. Ferner ist eine in Axialrichtung der Welle nachstellbare Hülse vorgesehen, um immer eine Anpressung zwischen den Dichtpartnern zu erhalten. Aufgrund dieser Nachstellbarkeit unterliegt diese Gleitringdichtung jedoch einem hohen Verschleiß, so dass die gewünschten langjährigen Standzeiten nicht erreichbar sind.

Ferner ist aus der WO 2015/172087 A1 eine Gleitringdichtungsanordnung umfassend zwei Gleitringdichtungen bekannt. Ein weiterer Problemkreis, welcher bei Bohrloch-Fördervorrichtungen auftritt, sind die hohen Temperaturen, welche am Grund des Bohrlochs herrschen. Die hohen Temperaturen führen zu einer Erwärmung eines Sperrmediums für die Gleitringdichtung, wodurch insbesondere auch eine Druckerhöhung erfolgt, so dass eine Leckage des Sperrmediums über den Dichtspalt der Gleitringdichtung vergrößert wird, was zu einer Reduzierung der Standzeit der Gleitringdichtung führen kann.

Es ist daher Aufgabe der vorliegenden Erfindung, eine Gleitringdichtungsanordnung bereitzustellen, welche bei einfachem Aufbau und einfacher, kostengünstiger Herstellbarkeit eine sichere Abdichtung einer Welle, insbesondere in einem Bohrloch, ermöglicht, wobei eine mehrjährige Funktion der Gleitringdichtungsanordnung sichergestellt ist. Ferner ist es Aufgabe der vorliegenden Erfindung, eine Bohrloch-Fördervorrichtung bereitzustellen, welche einen mehrjährigen Betrieb in einem Bohrloch ermöglicht.

Diese Aufgabe wird durch eine Gleitringdichtungsanordnung mit den Merkmalen des Anspruchs 1 und eine Bohrloch-Fördervorrichtung mit den Merkmalen des Anspruchs 8 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist den Vorteil auf, dass sie eine sichere Abdichtung über einen langen Zeitraum ermöglicht und insbesondere auch Temperaturänderungen und Druckänderungen kompensieren kann. Dabei ist es insbesondere möglich, dass Temperatursteigerungen, welche zu Drucksteigerungen in einer Dichtflüssigkeit (Sperrmedium) führen, ausgeglichen werden können. Die Gleitringdichtungsanordnung umfasst dabei eine erste Gleitringdichtung mit einem rotierenden und einem stationären Gleitring, welche zwischen sich einen Dichtspalt definieren. Die Dichtflüssigkeit ist in einem ersten Dichtraum angeordnet, wobei die erste Gleitringdichtung den ersten Dichtraum gegenüber einem Umgebungsbereich abdichtet. Weiterhin ist eine erste Kolbenanordnung vorgesehen, welche ein Kolbenelement und flexible Wandbereiche, die mit dem Kolbenelement verbunden sind, aufweist, wobei die flexiblen Wandbereiche und das Kolbenelement einen ersten Kolbeninnenraum definieren. Der erste Kolbeninnenraum ist mit dem ersten Dichtraum fluidverbunden, so dass im ersten Kolbeninnenraum ebenfalls Dichtflüssigkeit vorhanden ist. Eine Kolbenaußenfläche des ersten Kolbenelements ist in Fluidverbindung mit dem Umgebungsbereich. Somit steht an der Kolbenaußenfläche der Umgebungsdruck an. Ferner ist eine erste Vorspanneinrichtung vorgesehen, welche eine Vorspannkraft auf das erste Kolbenelement ausübt. Die Vorspannkraft ist dabei in Richtung zum ersten Kolbeninnenraum gerichtet. Dadurch wird sichergestellt, dass ein Druckniveau im ersten Dichtraum immer über einem Druckniveau im Umgebungsbereich liegt. Die flexiblen Wandbereiche der ersten Kolbenanordnung ermöglichen dabei eine Expansion der Dichtflüssigkeit im ersten Dichtraum bei ansteigender Temperatur. Somit kann erfindungsgemäß verhindert werden, dass bei steigender Temperatur und einer damit einhergehenden Volumenvergrößerung und einer Erhöhung eines Drucks der Dichtflüssigkeit eine zu große Leckage über den Dichtspalt der Gleitringdichtung auftritt, was die Nutzungsdauer der Gleitringdichtungsanordnung signifikant reduzieren würde. Daher ist die erfindungsgemäße Gleitringdichtungsanordnung insbesondere zur Verwendung bei Abdichtungsaufgaben geeignet, welche eine lange Funktionsdauer aufweisen müssen, wie beispielsweise bei einer Abdichtung zwischen einem Antrieb und einer Pumpe in einem Bohrloch.

Um eine Redundanz der Abdichtung eines Antriebs mit der erfindungsgemäßen Gleitringdichtungsanordnung zu erreichen, ist eine zweite Gleitringdichtung vorgesehen. Die zweite Gleitringdichtung ist gleich wie die erste Gleitringdichtung aufgebaut und in Reihe mit der ersten Gleitringdichtung angeordnet. Die zweite Gleitringdichtung umfasst einen rotierenden und einen stationären Gleitring, welche zwischen sich einen Dichtspalt definieren sowie einen mit Dichtflüssigkeit gefüllten zweiten Dichtraum. Die Dichtflüssigkeit ist besonders bevorzugt die gleiche Dichtflüssigkeit wie die der ersten Gleitringdichtung. Ferner umfasst die zweite Gleitringdichtung eine zweite Kolbenanordnung mit einem zweiten Kolbenelement und flexiblen Wandbereichen, welche einen zweiten Kolbeninnenraum definieren. Die zweite Gleitringdichtung dichtet dabei den zweiten Dichtraum vom ersten Dichtraum ab. Dabei ist der zweite Kolbeninnenraum der zweiten Kolbenanordnung mit dem zweiten Dichtraum fluidverbunden. Weiterhin ist eine zweite Vorspanneinrichtung vorgesehen, welche eine Vorspannkraft auf das zweite Kolbenelement der zweiten Kolbenanordnung ausübt. Somit kann eine redundante Abdichtung erreicht werden.

Weiter ist der erste Kolbeninnenraum ein Ringraum und das erste Kolbenelement ist ein Ringkolben. Dadurch kann die erste Kolbenanordnung um eine Welle herum angeordnet werden und es ergibt sich ein besonders kompakter Aufbau der Gleitringdichtungsanordnung.

Weiter bevorzugt sind die flexiblen Wandbereiche der ersten Kolbenanordnung mittels eines ersten Faltenbalgs und eines zweiten Faltenbalgs bereitgestellt. Dabei weisen der erste Faltenbalg und der zweite Faltenbalg vorzugsweise eine im Wesentlichen zylindrische Form auf, wobei die Durchmesser verschieden sind. Dadurch wird der Kolbeninnenraum zwischen dem ersten Faltenbalg und dem zweiten Faltenbalg bereitgestellt. Die beiden Faltenbälge sind vorzugsweise aus Metall hergestellt.

Die erste Vorspanneinrichtung umfasst besonders bevorzugt eine Vielzahl von Federelementen. Die Vielzahl von Federelementen sind vorzugsweise in Umfangsrichtung gleich voneinander beabstandet angeordnet. Die Federelemente sind besonders bevorzugt Spiralfedern.

Weiter bevorzugt umfasst die Gleitringdichtungsanordnung eine dritte Gleitringdichtung, welche entsprechend der ersten und zweiten Gleitringdichtung aufgebaut ist. Die dritte Gleitringdichtung dichtet dabei zwischen einem dritten Dichtraum und dem zweiten Dichtraum ab. Die dritte Gleitringdichtung ist in Reihe nach der zweiten Gleitringdichtung angeordnet. Die dritte Gleitringdichtung umfasst eine mit Dichtflüssigkeit gefüllten dritten Dichtraum und eine dritte Kolbenanordnung mit einem dritten Kolbenelement und flexiblen Wandbereichen, welche einen dritten Kolbeninnenraum definieren. Der dritte Kolbeninnenraum ist mit dem dritten Dichtraum fluidverbunden und eine Kolbenaußenfläche des Kolbenelements der dritten Kolbenanordnung ist in Fluidverbindung mit dem zweiten Dichtraum. Weiterhin ist eine dritte Vorspanneinrichtung vorgesehen, welche eine Vorspannkraft auf das dritte Kolbenelement der dritten Kolbenanordnung ausübt.

Für eine weitere Redundanz ist bevorzugt eine vierte Gleitringdichtung vorgesehen, welche in Reihe nach der dritten Gleitringdichtung angeordnet ist und den gleichen Aufbau wie die dritte Gleitringdichtung aufweist. Die vierte Gleitringdichtung dichtet dabei zwischen einem vierten Dichtraum und dem dritten Dichtraum ab. Die vierte Gleitringdichtung umfasst eine vierte Kolbenanordnung mit einem vierten Kolbenelement und flexiblen Wandbereichen, welche einen vierten Kolbeninnenraum definieren, wobei der Kolbeninnenraum der vierten Kolbenanordnung mit dem vierten Dichtraum fluidverbunden ist. Eine Kolbenaußenfläche des vierten Kolbenelements der vierten Kolbenanordnung steht in Fluidverbindung mit dem dritten Dichtraum. Weiterhin ist eine vierte Vorspanneinrichtung vorgesehen, welche eine Vorspannkraft auf das Kolbenelement der vierten Kolbenanordnung ausübt.

Wie aus der vorhergehenden Beschreibung deutlich wird, kann die Gleitringdichtungsanordnung mehrere Gleitringdichtungen, beispielsweise zwischen ein bis vier Gleitringdichtungen umfassen, welche in Reihe nacheinander, ausgehend von dem abzudichtenden Medium, z.B. einem Dielektrikum, eines elektrischen Antriebs, bis zum Umgebungsbereich in Reihe abdichten. Durch die erfindungsgemäße Anordnung ergeben sich immer etwas höhere Drücke in den vom Umgebungsbereich weiter abgewandten Dichtbereichen. D.h., ein Druck im ersten Dichtraum ist kleiner als ein Druck im zweiten Dichtraum und ein Druck im zweiten Dichtraum ist kleiner als ein Druck im dritten Dichtraum, und ein Druck im dritten Dichtraum ist kleiner als ein Druck im vierten Dichtraum.

Durch den höheren Druck der Dichtflüssigkeit gegenüber dem Umgebungsbereich wird insbesondere auch eine Kontamination der Dichtflüssigkeit durch das im Umgebungsbereich befindliche zu fördernde Produkt vermieden.

Wenn die erfindungsgemäße Gleitringdichtungsanordnung mehr als eine Gleitringdichtung umfasst, sind vorzugsweise die Dichtflüssigkeiten in der Mehrzahl von Gleitringdichtungen gleich. Besonders bevorzugt wird hierbei als Dichtflüssigkeit ein Öl verwendet. Das Öl hat besonders bevorzugt eine Dichte entsprechend dem zu fördernden Produkt, welches vorzugsweise Rohöl ist. Dann kann eine besonders gute und sichere Kompensation von Temperaturerhöhungen der Dichtflüssigkeiten sichergestellt werden.

Weiter bevorzugt umfasst die Gleitringdichtungsanordnung eine Gehäusehülse, in welcher die Bauteile der Gleitringdichtungsanordnung angeordnet sind. Die Gehäusehülse weist vorzugsweise eine Öffnung mit möglichst kleinem Durchmesser auf, um eine Verbindung zwischen dem Umgebungsbereich und der Außenseite der Gehäusehülse bereitzustellen. Der Umgebungsbereich an der Gleitringdichtung weist dadurch den Umgebungsdruck auf.

Ferner betrifft die vorliegende Erfindung eine Bohrloch-Fördervorrichtung, insbesondere zur Förderung von ölhaltigen Medien bzw. Rohöl. Die Fördervorrichtung umfasst einen elektrischen Antrieb und eine Pumpe, welche mit dem elektrischen Antrieb über eine Antriebswelle verbunden ist. An der Antriebswelle dichtet eine erfindungsgemäße Gleitringdichtungsanordnung ab.

Besonders bevorzugt ist zwischen dem elektrischen Antrieb und der Pumpe eine Gehäusehülse angeordnet, in welcher die Gleitringdichtungsanordnung angeordnet ist. Die Gehäusehülse weist wenigstens eine Öffnung auf, um einen Umgebungsbereich der Gleitringdichtungsanordnung mit der Außenseite der Gehäusehülse zu verbinden.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Darstellung einer Bohrloch-Fördervorrichtung gemäß einem Beispiel,
- Fig. 2: eine schematische Darstellung der Gleitringdichtungsanordnung der Bohrloch-Fördervorrichtung von Fig. 1,
- Fig. 3: eine schematische Schnittansicht entlang der Linie III-III von Fig. 2,
- Fig. 4: eine schematische Schnittansicht einer Gleitringdichtungsanordnung gemäß einem ersten Ausführungsbeispiel der Erfindung,
- Fig. 5: eine schematische Schnittansicht einer Gleitringdichtungsanordnung gemäß einem zweiten Ausführungsbeispiel der Erfindung, und
- Fig. 6: eine schematische Schnittansicht einer Gleitringdichtungsanordnung gemäß einem dritten Ausführungsbeispiel der Erfindung.

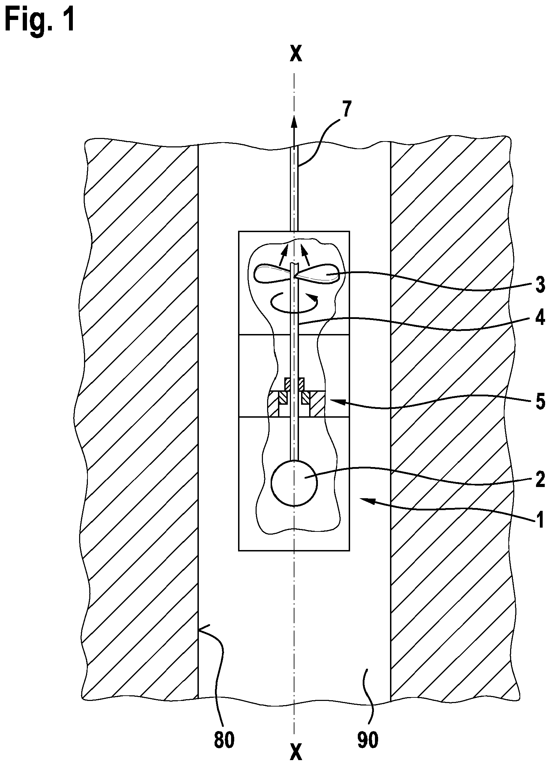

Nachfolgend wird unter Bezugnahme auf die Fig. 1 bis 3 eine Bohrloch-Fördervorrichtung 1 gemäß einem Beispiel zum besseren Verständnis der Erfindung im Detail beschrieben.

Fig. 1 zeigt schematisch eine Übersicht der Bohrloch-Fördervorrichtung 1. Die Bohrloch-Fördervorrichtung 1 ist in einem Bohrloch 80 angeordnet, um ein Medium 90, insbesondere Rohöl, welches sich im Bohrloch befindet, zu fördern.

Die Bohrloch-Fördervorrichtung 1 umfasst einen elektrischen Antrieb 2 und eine Pumpe 3, wobei zur Abdichtung eines Fluids im elektrischen Antrieb eine Gleitringdichtungsanordnung 5 vorgesehen ist. Wie aus Fig. 1 ersichtlich ist, ist die Gleitringdichtungsanordnung 5 an einer Antriebswelle 4, welche vom elektrischen Antrieb 2 zur Pumpe 3 führt, angeordnet.

Die Pumpe 3 fördert dabei in eine Förderleitung 7.

Die Gleitringdichtungsanordnung 5 umfasst eine erste Gleitringdichtung 10 mit einem rotierenden Gleitring 11 und einem stationären Gleitring 12, welche zwischen sich einen Dichtspalt 13 definieren.

Ferner umfasst die erste Gleitringdichtung 10 einen ersten Dichtraum 14 sowie eine erste Kolbenanordnung 15.

Die erste Kolbenanordnung 15 umfasst ein erstes Kolbenelement 16, einen ersten Faltenbalg 17 und einen zweiten Faltenbalg 18. Das Kolbenelement 16, der erste Faltenbalg 17 und der zweite Faltenbalg 18 definieren einen ersten Kolbeninnenraum 160. Der erste Kolbeninnenraum 160 ist mit einem ersten Dichtraum 14 fluidverbunden, in welchem eine Dichtflüssigkeit (Sperrmedium) für die Gleitringdichtung aufgenommen ist.

Weiterhin umfasst die erste Gleitringdichtung 10 eine Vorspanneinrichtung 19, welche in diesem Ausführungsbeispiel eine Vielzahl von Federelementen ist. Die Federelemente üben jeweils eine Vorspannkraft F1 in Richtung auf das erste Kolbenelement 16 aus.

Das erste Kolbenelement 16 ist ringförmig und definiert zusammen mit dem ersten und zweiten Faltenbalg 17, 18 einen ringförmigen Kolbeninnenraum160. Die beiden Faltenbalge 17, 18 sind dabei als Metallfaltenbalge mit unterschiedlichen Durchmessern ausgebildet.

Weiterhin umfasst die Gleitringdichtungsanordnung 5 einen Umgebungsbereich 6. Die erste Gleitringdichtung 10 dichtet dabei den Umgebungsbereich 6 vom ersten Dichtraum 14 ab. Der Umgebungsbereich 6 ist über eine Öffnung 9 mit der Außenseite einer Gehäusehülse 8, an welcher das zu fördernde Medium 90 ansteht, verbunden. Dadurch herrscht im Umgebungsbereich 6 der gleiche Druck P0 wie an der Außenseite der Bohrloch-Fördervorrichtung 1.

Die Öffnung 9 ist dabei möglichst klein gewählt, um möglichst keine Feststoffteile, welche zu Verschmutzungen des Umgebungsbereichs 6 führen könnten, hineinzulassen.

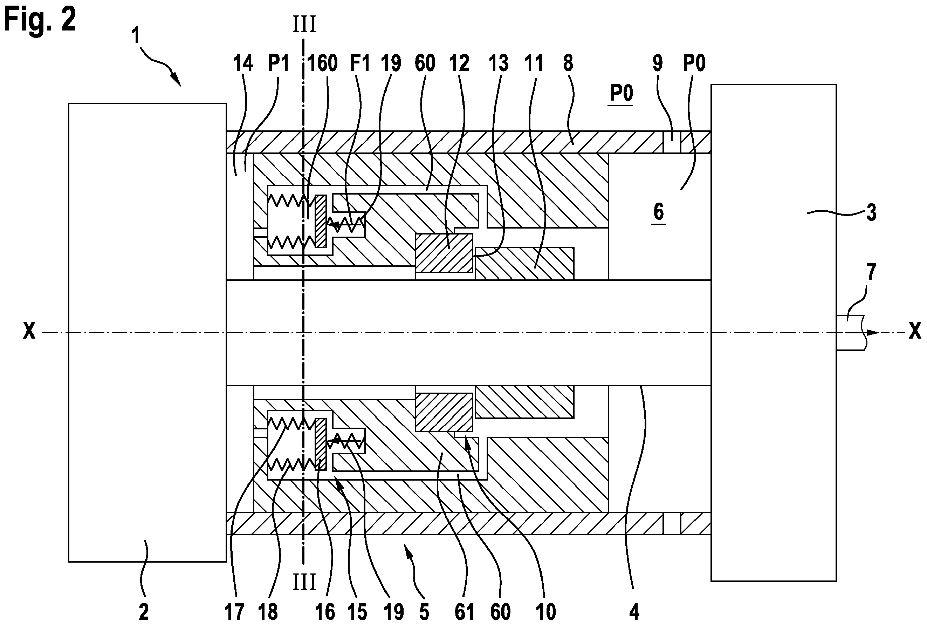

Wie aus Fig. 2 ersichtlich ist, ist der Umgebungsbereich 6 über Kanäle 60 in einem Gleitringträgerbauteil 61 mit einem Bereich an der Außenseite des zweiten Faltenbalgs 18 verbunden. Somit steht eine Kolbenaußenfläche des ersten Kolbenelements 16 der ersten Kolbenanordnung 15 mit dem Umgebungsbereich 6 in Verbindung.

Somit herrscht im Umgebungsbereich 6 und im Bohrloch 80 ein gleicher Druck P0. Im ersten Dichtraum 14 herrscht ein Druck P1, welcher größer ist als der Druck P0. Dies wird dadurch erreicht, dass die Vorspanneinrichtung 19 eine Vorspannkraft F1 auf das ringförmige Kolbenelement 16 ausübt.

Wie weiter aus Fig. 2 ersichtlich ist, ist die erste Kolbenanordnung 15 in Axialrichtung X-X der Gleitringdichtungsanordnung 1 näher am Antrieb 2 angeordnet als die erste Gleitringdichtung 10. Die Dichtflüssigkeit im ersten Dichtraum 14 ist dabei bevorzugt ein Dielektrikum eines elektrischen Motors des Antriebs 2.

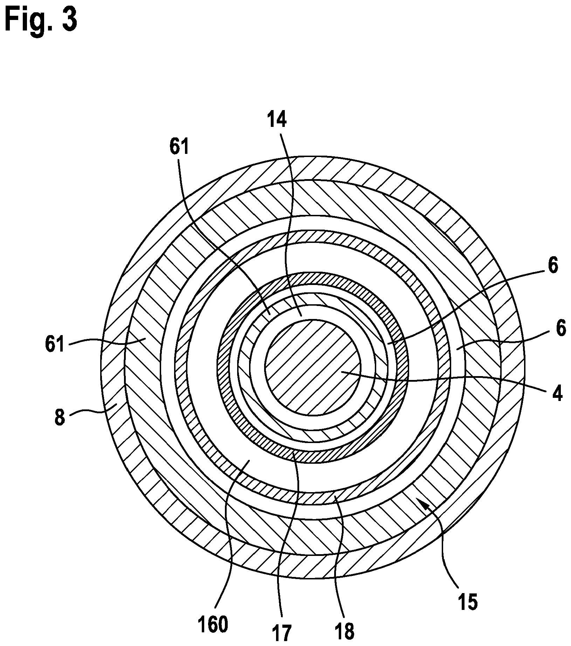

Fig. 3 zeigt einen Querschnitt der ersten Kolbenanordnung 15. Wie aus Fig. 3 deutlich wird, ist die erste Kolbenanordnung 15 vollständig vom Umgebungsbereich 6 umschlossen.

Wenn nun beispielsweise am Grund des Bohrlochs, an welchem die Bohrloch-Fördervorrichtung 1 angeordnet ist, eine Temperatur ansteigt, steigt auch die Temperatur der Dichtflüssigkeit im ersten Dichtraum 14 an. Dadurch ergibt sich eine Expansion der Dichtflüssigkeit, welche durch die Flexibilität der beiden Faltenbälge 17, 18 ausgeglichen werden kann. Hierbei übt jedoch die Vorspanneinrichtung 19 die Vorspannkraft F1 auf das Kolbenelement 16 aus, so dass sich ein neues Gleichgewicht einstellt. Durch das Vorsehen der Vorspanneinrichtung 19 wird jedoch sichergestellt, dass ein Druck im ersten Dichtraum 14 immer höher ist als im Umgebungsbereich 6. Dadurch wird verhindert, dass Medium aus dem Umgebungsbereich 6 in den Dichtspalt 13 zwischen dem rotierenden Gleitring 11 und dem stationären Gleitring 12 gelangen kann.

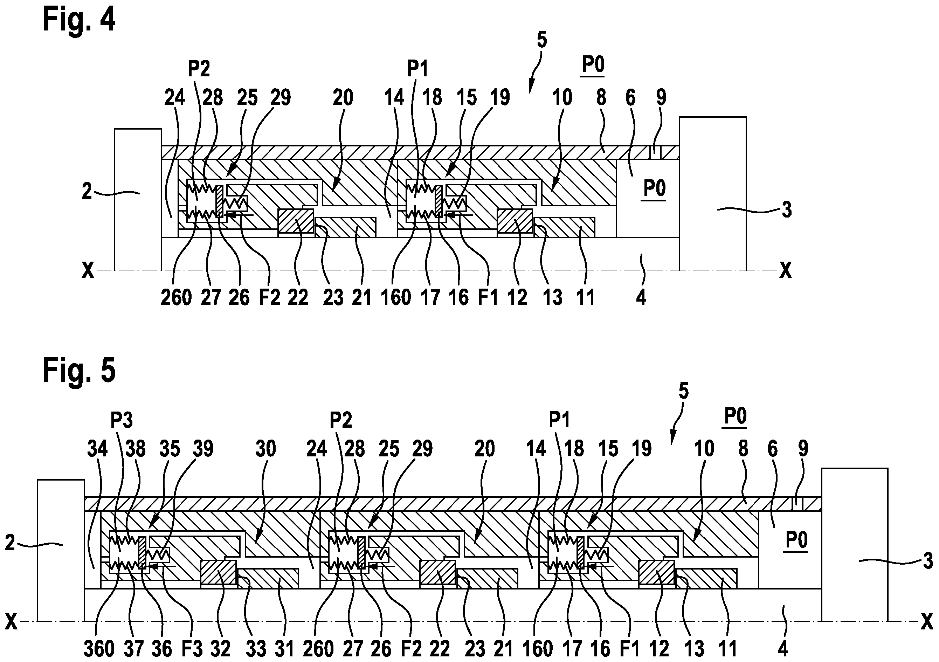

Fig. 4 zeigt eine Gleitringdichtungsanordnung einer Bohrloch-Fördervorrichtung gemäß einem ersten Ausführungsbeispiel der Erfindung. Im Unterschied zum zuvor beschriebenen Beispiel ist beim ersten Ausführungsbeispiel eine zweite Gleitringdichtung 20 vorgesehen. Dabei sind die erste Gleitringdichtung 10 und die zweite Gleitringdichtung 20 in Reihe zwischen dem Antrieb 2 und der Pumpe 3 angeordnet. Die Gehäusehülse 8 umschließt dabei beide Gleitringdichtungen 10, 20.

Der Aufbau der zweiten Gleitringdichtung 20 entspricht dabei dem Aufbau der ersten Gleitringdichtung 10. Genauer umfasst die zweite Gleitringdichtung 20 einen rotierenden Gleitring 21 und einen stationären Gleitring 22, welche zwischen sich einen Dichtspalt 23 definieren. Die zweite Gleitringdichtung 20 dichtet dabei einen zweiten Dichtraum 24 vom ersten Dichtraum 14 ab. Die zweite Gleitringdichtung 20 umfasst ferner eine zweite Kolbenanordnung 25. Die zweite Kolbenanordnung 25 umfasst ein zweites Kolbenelement 26, einen ersten Faltenbalg 27 und einen zweiten Faltenbalg 28. Ein Kolbeninnenraum der zweiten Kolbenanordnung 25 ist mit dem Bezugszeichen 260 bezeichnet. Der Kolbeninnenraum 260 steht dabei mit dem zweiten Dichtraum 24 in Fluidverbindung. Weiterhin sind zweite Vorspanneinrichtungen 29 vorgesehen, welche eine zweite Vorspannkraft F2 auf das zweite Kolbenelement 26 der zweiten Kolbenanordnung 25 ausüben. Dadurch wird sichergestellt, dass ein zweiter Druck P2 im zweiten Dichtraum 25 größer ist als der erste Druck P1 im ersten Dichtraum 14. Der erste Druck P1 im ersten Dichtraum 14 ist wiederum größer als der Druck P0 im Umgebungsbereich 6. Somit wird sichergestellt, dass durch das Vorsehen der Kolbenanordnungen 15, 25 und der Vorspanneinrichtungen 19, 29 immer ein etwas höheres Druckniveau im Vergleich zu durch die Gleitringdichtungen 10, 20 voneinander getrennten Bereichen herrscht. Der Druck steigt somit in Axialrichtung X-X, ausgehend von Druck P0, im Umgebungsbereich 6 in Richtung zum Antrieb 2 an. Dadurch wird sichergestellt, dass keine Verschmutzung der Dichtflüssigkeit im zweiten Dichtraum 24, welche direkt am Antrieb 2 abdichtet, erfolgt. Selbst bei Ausfall der ersten Gleitringdichtung 10 ist eine redundante zweite Gleitringdichtung vorhanden.

Fig. 5 zeigt eine Gleitringdichtungsanordnung 1 gemäß einem zweiten Ausführungsbeispiel der Erfindung. Wie aus Fig. 5 ersichtlich ist, ist eine dritte Gleitringdichtung 30 vorgesehen, um eine zusätzliche Redundanz bei der Abdichtung bereitzustellen. Dabei sind die erste Gleitringdichtung 10, die zweite Gleitringdichtung 20 und die dritte Gleitringdichtung 30 in Reihe, ausgehend von der Pumpe 3 zum Antrieb 2 angeordnet. Die dritte Gleitringdichtung 30 umfasst einen rotierenden Gleitring 31 und einen stationären Gleitring 32, welche zwischen sich einen Dichtspalt 33 definieren. Ein dritter Dichtraum 34 ist mit einer Dichtflüssigkeit gefüllt, welche am Antrieb 2 abdichtet. Die dritte Gleitringdichtung 30 umfasst eine dritte Kolbenanordnung 35 mit einem dritten Kolbenelement 36, einem ersten Faltenbalg 37 und einem zweiten Faltenbalg 38, welche zwischen sich einen dritten Kolbeninnenraum 360 definieren. Der dritte Kolbeninnenraum 360 ist mit dem dritten Dichtraum 34 in Fluidverbindung. Eine dritte Vorspanneinrichtung 39 ist vorgesehen, um eine Vorspannkraft F3 auf die dritte Kolbenanordnung 35 auszuüben.

Somit weisen die drei Gleitringdichtungen 10, 20, 30 grundsätzlich den gleichen Aufbau auf und sind in Reihe nacheinander geschaltet. Ein dritter Druck P3 im dritten Dichtraum 34 ist dabei größer als ein zweiter Druck P2 im zweiten Dichtraum 24. Der zweite Druck P2 im zweiten Dichtraum 24 ist dabei wiederum größer als der erste Druck P1 im ersten Druckraum 14. Der erste Druck P1 ist wiederum größer als der Druck P0 im Umgebungsbereich 6. Somit ist eine dritte Gleitringdichtung 30 zur weiteren Abdichtung und Redundanz bei Versagen der ersten oder zweiten Gleitringdichtung vorgesehen.

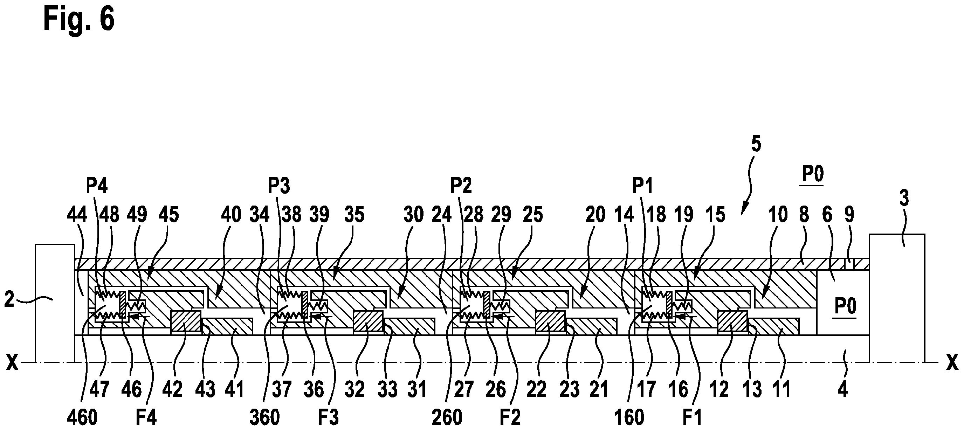

Fig. 6 zeigt eine Gleitringdichtungsanordnung 1 gemäß einem dritten Ausführungsbeispiel der Erfindung. Im vierten Ausführungsbeispiel ist zusätzlich noch eine vierte Gleitringdichtung 40 angeordnet. Die vierte Gleitringdichtung 40 weist einen gleichen Aufbau wie die drei anderen Gleitringdichtungen 10, 20 und 30 auf. Genauer umfasst die vierte Gleitringdichtung 40 einen rotierenden Gleitring 41 und einen stationären Gleitring 42, welche zwischen sich einen Dichtspalt 43 definieren. Ein vierter Dichtraum ist mit dem Bezugszeichen 44 versehen. Ferner ist eine vierte Kolbenanordnung 45 mit einem ringförmigen vierten Kolbenelement 46, einem ersten Faltenbalg 47 und einem zweiten Faltenbalg 48 vorgesehen. Das vierte Kolbenelement 46 und die beiden Faltenbälge 47, 48 definieren einen vierten Kolbeninnenraum 460 der vierten Kolbenanordnung 45. Eine vierte Vorspanneinrichtung 49 übt eine vierte Vorspannkraft F4 in Axialrichtung X-X auf die vierte Kolbenanordnung 45 aus. Die vierte Gleitringdichtung 40 dichtet somit zwischen dem vierten Dichtraum 44 und dem dritten Dichtraum 34 ab. Die Anordnung der drei weiteren Gleitringdichtungen 10, 20 und 30 entspricht dabei der im zweiten Ausführungsbeispiel beschriebenen Anordnung. Somit sind in diesem Ausführungsbeispiel insgesamt vier Gleitringdichtungen 10, 20, 30, 40 in Reihe zwischen dem Antrieb 2 und der Pumpe 3 angeordnet, so dass auch bei Ausfall einzelner Gleitringdichtungen eine hohe Sicherheit gegeben ist, dass ein jahrelanger Betrieb in einem Bohrloch oder dgl. möglich ist.

Die erfindungsgemäße Gleitringdichtungsanordnung 5 ist somit bestens dazu geeignet, in einer Bohrloch-Fördervorrichtung verwendet zu werden. Dadurch kann ein sicherer und beschädigungsfreier Betrieb der Bohrloch-Fördervorrichtung ermöglicht werden. Insbesondere kann bei Hintereinanderschaltung mehrerer Gleitringdichtungen redundant sichergestellt werden, dass verhindert wird, dass ein zu förderndes Medium 90 in einem Motorraum des elektrischen Antriebs 2 gelangen kann. Somit kann eine mehrjährige Laufdauer des elektrischen Antriebs 2 problemlos sichergestellt werden.

### Bezugszeichenliste

- 1: Bohrloch-Fördervorrichtung
- 2: elektrischer Antrieb
- 3: Pumpe
- 4: Antriebswelle
- 5: Gleitringdichtungsanordnung
- 6: Umgebungsbereich
- 7: Förderleitung
- 8: Gehäusehülse
- 9: Öffnung
- 10: erste Gleitringdichtung
- 11: rotierender Gleitring
- 12: stationärer Gleitring
- 13: Dichtspalt
- 14: erster Dichtraum
- 15: erste Kolbenanordnung
- 16: erstes Kolbenelement
- 17: erster Faltenbalg
- 18: zweiter Faltenbalg
- 19: erste Vorspanneinrichtung
- 20: zweite Gleitringdichtung
- 21: rotierender Gleitring
- 22: stationärer Gleitring
- 23: Dichtspalt
- 24: zweiter Dichtraum
- 25: zweite Kolbenanordnung
- 26: zweites Kolbenelement
- 27: erster Faltenbalg
- 28: zweiter Faltenbalg
- 29: zweite Vorspanneinrichtung
- 30: dritte Gleitringdichtung
- 31: rotierender Gleitring
- 32: stationärer Gleitring
- 33: Dichtspalt
- 34: dritter Dichtraum
- 35: dritte Kolbenanordnung
- 36: drittes Kolbenelement
- 37: erster Faltenbalg
- 38: zweiter Faltenbalg
- 39: dritte Vorspanneinrichtung
- 40: vierte Gleitringdichtung
- 41: rotierender Gleitring
- 42: stationärer Gleitring
- 43: Dichtspalt
- 44: vierter Dichtraum
- 45: vierte Kolbenanordnung
- 46: viertes Kolbenelement
- 47: erster Faltenbalg
- 48: zweiter Faltenbalg
- 49: vierte Vorspanneinrichtung
- 60: Kanäle
- 61: Gleitringträgerbauteil
- 80: Bohrloch
- 90: zu förderndes Medium
- 160: erster Kolbeninnenraum
- 260: zweiter Kolbeninnenraum
- 360: dritter Kolbeninnenraum
- 460: vierter Kolbeninnenraum
- F1: erste Vorspannkraft
- F2: zweite Vorspannkraft
- F3: dritte Vorspannkraft
- F4: vierte Vorspannkraft
- P0: Umgebungsdruck
- P1: erster Druck
- P2: zweiter Druck
- P3: dritter Druck
- P4: vierter Druck
- X-X: Axialrichtung

## Patentansprüche

1. Gleitringdichtungsanordnung, umfassend:
- eine erste Gleitringdichtung (10) mit einem rotierenden Gleitring (11) und einem stationären Gleitring (12), welche zwischen sich einen Dichtspalt (13) definieren,
- einen mit einer Dichtflüssigkeit gefüllten ersten Dichtraum (14),
- wobei die erste Gleitringdichtung (10) den Dichtraum (14) gegenüber einem Umgebungsbereich (6) abdichtet,
- eine erste Kolbenanordnung (15) mit einem Kolbenelement (16) und flexiblen Wandbereichen, welche einen ersten Kolbeninnenraum (160) definieren,
- wobei der erste Kolbeninnenraum (160) mit dem ersten Dichtraum (14) fluidverbunden ist,
- wobei eine Kolbenaußenfläche des Kolbenelements (16) in Fluidverbindung mit dem Umgebungsbereich (6) steht, und
- eine erste Vorspanneinrichtung (19), welche eine erste Vorspannkraft (F1) auf das Kolbenelement (16) der ersten Kolbenanordnung (15) ausübt,
- eine zweite Gleitringdichtung (20) mit einem rotierenden Gleitring (21) und einem stationären Gleitring (22), welche zwischen sich einen Dichtspalt (23) definieren,
- einem zweiten Dichtraum (24) und
- einer zweiten Kolbenanordnung (25) mit einem Kolbenelement (26) und flexiblen Wandbereichen (27, 28), welche einen zweiten Kolbeninnenraum (260) definieren,
- wobei der zweite Kolbeninnenraum (260) mit dem zweiten Dichtraum (24) fluidverbunden ist, und eine zweite Vorspanneinrichtung (29) eine zweite Vorspannkraft (F2) auf die zweite Kolbenanordnung (25) ausübt, wobei
- die zweite Gleitringdichtung (20) zwischen dem ersten Dichtraum (14) und dem zweiten Dichtraum (24) angeordnet ist,
- wobei der erste Kolbeninnenraum (160) ein Ringraum ist und das Kolbenelement (16) der ersten Kolbenanordnung (15) ein Ringkolben ist.

2. Anordnung nach Anspruch 1, wobei die flexiblen Wandbereiche einen ersten Faltenbalg (17) und einen zweiten Faltenbalg (18) umfassen.

3. Anordnung nach einem der vorhergehenden Ansprüche, wobei die erste Vorspanneinrichtung (19) eine Vielzahl von Federelementen umfasst.

4. Anordnung nach Anspruch 1, **gekennzeichnet durch** eine dritte Gleitringdichtung (30) mit einem rotierenden Gleitring (31) und einem stationären Gleitring (32), welche zwischen sich einen Dichtspalt (33) definieren, einem dritten Dichtraum (34) und einer dritten Kolbenanordnung (35) mit einem Kolbenelement (36) und flexiblen Wandbereichen (37, 38), welche einen dritten Kolbeninnenraum (360) definieren, wobei die dritte Gleitringdichtung (30) zwischen dem zweiten Dichtraum (24) und dem dritten Dichtraum (34) angeordnet ist und der dritte Kolbeninnenraum (360) mit dem dritten Dichtraum (34) in Fluidverbindung steht, und eine dritte Vorspanneinrichtung (39), welche eine dritte Vorspannkraft (F3) auf die dritte Kolbenanordnung (35) ausübt.

5. Anordnung nach Anspruch 4, **gekennzeichnet durch** eine vierte Gleitringdichtung (40) mit einem rotierenden Gleitring (41) und einem stationären Gleitring (42), welche zwischen sich einen Dichtspalt (43) definieren, einem vierten Dichtraum (44) und einer vierten Kolbenanordnung (45) mit einem Kolbenelement (46) und flexiblen Wandbereichen (47, 48), welche einen vierten Kolbeninnenraum (460) definieren, wobei die vierte Gleitringdichtung (40) zwischen dem dritten Dichtraum (34) und dem vierten Dichtraum (44) angeordnet ist und der vierte Kolbeninnenraum (460) mit dem vierten Dichtraum (44) in Fluidverbindung steht, und eine vierte Vorspanneinrichtung (49) eine vierte Vorspannkraft (F4) auf die vierte Kolbenanordnung (45) ausübt.

6. Anordnung nach einem der vorhergehenden Ansprüche, ferner umfassend eine Gehäusehülse (8) mit mindestens einer Öffnung (9), welche den Umgebungsbereich (6) umschließt, wobei die Öffnung (9) eine Verbindung zu einer Außenseite der Gehäusehülse (8) bereitstellt.

7. Bohrloch-Fördervorrichtung, insbesondere zur Förderung von ölhaltigen Medien, umfassend:
- einen elektrischen Antrieb (2),
- eine Pumpe (3), welche mit dem elektrischen Antrieb (2) über eine Antriebswelle (4) verbunden ist, und
- eine Gleitringdichtungsanordnung (5) nach einem der vorhergehenden Ansprüche, welche an der Antriebswelle (4) angeordnet ist.

8. Bohrloch-Fördervorrichtung nach Anspruch 7, umfassend eine Gehäusehülse (8) mit mindestens einer Öffnung (9), welche die Gleitringdichtungsanordnung (1) umschließt.

## Claims

1. Mechanical seal arrangement, comprising:
- a first mechanical seal (10) with a rotating slide ring (11) and a stationary slide ring (12), which define a sealing gap (13) in between them,
- a first sealing space (14) that is filled with a sealing liquid,
- wherein the first mechanical seal (10) seals off the sealing space (14) against a surrounding area (6),
- a first piston arrangement (15) with a piston element (16) and flexible wall areas that define a first piston interior space (160),
- wherein the first piston interior space (160) is in fluid connection with the first sealing space (14),
- wherein a piston outer surface of the piston element (16) is in fluid connection with the surrounding area (6), and
- a first pre-stressing appliance (19) that exerts a first preload force (F1) on the piston element (16) of the first piston arrangement (15),
- a second mechanical seal (20) with a rotating slide ring (21) and a stationary slide ring (22), which define a sealing gap (23) in between them,
- a second sealing space (24) and
- a second piston arrangement (25) with a piston element (26) and flexible wall areas (27, 28), which define a second piston interior space (260),
- wherein the second piston interior space (260) is in fluid connection with the second sealing space (24) and a second pre-stressing appliance (29) exerts a second preload force (F2) on the second piston arrangement (25),
- wherein the second mechanical seal (20) is arranged between the first sealing space (14) and the second sealing space (24),
- wherein the first piston interior space (160) is an annular space and the piston element (16) of the first piston arrangement (15) is an annular piston.

2. Arrangement according to claim 1, wherein the flexible wall areas comprise a first bellows (17) and a second bellows (18).

3. Arrangement according to any of the preceding claims, wherein the first pre-stressing appliance (19) comprises a plurality of spring elements.

4. Arrangement according to claim 1, **characterized by** having a third mechanical seal (30) with a rotating slide ring (31) and a stationary slide ring (32), which defines a sealing gap (33) in between them, a third sealing space (34) and a third piston arrangement (35) with a piston element (36) and flexible wall areas (37, 38), which define a third piston interior space (360), wherein the third mechanical seal (30) is arranged between the second sealing space (24) and the third sealing space (34) and the third piston interior space (360) is in fluid connection with the third sealing space (34), and a third pre-stressing appliance (39), which exerts a third preload force (F3) on the third piston arrangement (35).

5. Arrangement according to claim 4, **characterized by** having a fourth mechanical seal (40) with a rotating slide ring (41) and a stationary slide ring (42), which define a sealing gap (43) in between them, a fourth sealing space (44) and a fourth piston arrangement (45) with a piston element (46) and flexible wall areas (47, 48), which define a fourth piston interior space (460), wherein the fourth mechanical seal (40) is arranged between the third sealing space (34) and the fourth sealing space (44) and the fourth piston interior space (460) is in fluid connection with the fourth sealing space (44), and a fourth pre-stressing appliance (49) exerts a fourth preload force (F4) on the fourth piston arrangement (45).

6. Arrangement according to any of the preceding claims, further comprising a housing sleeve (8) with at least one opening (9) that encloses the surrounding area (6), wherein the opening (9) provides a connection to an outer side of the housing sleeve (8).

7. Well bore conveyor device, in particular for conveying oleiferous media, comprising:
- an electrical drive (2),
- a pump (3) that is connected to the electrical drive (2) via a drive shaft (4), and
- a mechanical seal arrangement (5) according to any of the preceding claims that is arranged at the drive shaft (4).

8. Well bore conveyor device according to claim 7, comprising a housing sleeve (8) with at least one opening (9) that encloses the mechanical seal arrangement (1).

## Revendications

1. Ensemble garniture mécanique d'étanchéité comprenant :
- une première garniture mécanique d'étanchéité (10) avec un anneau glissant rotatif (11) et un anneau glissant stationnaire (12) qui définissent entre eux une fente étanche (13),
- un premier espace d'étanchéité (14) rempli d'un liquide d'étanchéité,
- dans lequel la première garniture mécanique d'étanchéité (10) rend étanche l'espace d'étanchéité (14) par rapport à une zone environnante (6),
- un premier ensemble de piston (15) avec un élément de piston (16) et des zones de paroi flexibles qui définissent un premier espace intérieur de piston (160),
- dans lequel le premier espace intérieur de piston (160) est relié fluidiquement au premier espace d'étanchéité (14),
- dans lequel une surface extérieure de piston de l'élément de piston (16) est en liaison fluidique avec la zone environnante (6), et
- un premier dispositif de précontrainte (19) qui exerce une première force de précontrainte (F1) sur l'élément de piston (16) du premier ensemble de piston (15),
- une deuxième garniture mécanique d'étanchéité (20) avec un anneau glissant rotatif (21) et un anneau glissant stationnaire (22) qui définissent entre eux une fente étanche (23),
- un deuxième espace d'étanchéité (24) et
- un deuxième ensemble de piston (25) avec un élément de piston (26) et des zones de paroi (27, 28) flexibles qui définissent un deuxième espace intérieur de piston (260),
- dans lequel le deuxième espace intérieur de piston (260) est relié fluidiquement au deuxième espace d'étanchéité (24), et un deuxième dispositif de précontrainte (29) exerce une deuxième force de précontrainte (F2) sur le deuxième ensemble de piston (25),
dans lequel
- la deuxième garniture mécanique d'étanchéité (20) est agencée entre le premier espace d'étanchéité (14) et le deuxième espace d'étanchéité (24),
- dans lequel le premier espace intérieur de piston (160) est un espace annulaire et l'élément de piston (16) du premier ensemble de piston (15) est un piston annulaire.

2. Ensemble selon la revendication 1, dans lequel les zones de paroi flexibles comportent un premier soufflet (17) et un second soufflet (18).

3. Ensemble selon l'une des revendications précédentes, dans lequel le premier dispositif de précontrainte (19) comporte une pluralité d'éléments de ressort.

4. Ensemble selon la revendication 1, **caractérisé par** une troisième garniture mécanique d'étanchéité (30) avec un anneau glissant rotatif (31) et un anneau glissant stationnaire (32) qui définissent entre eux une fente étanche (33), un troisième espace d'étanchéité (34) et un troisième ensemble de piston (35) avec un élément de piston (36) et des zones de paroi (37, 38) flexibles qui définissent un troisième espace intérieur de piston (360), dans lequel la troisième garniture mécanique d'étanchéité (30) est agencée entre le deuxième espace d'étanchéité (24) et le troisième espace d'étanchéité (34) et le troisième espace intérieur de piston (360) est en liaison fluidique avec le troisième espace d'étanchéité (34), et un troisième dispositif de précontrainte (39) qui exerce une troisième force de précontrainte (F3) sur l'ensemble de piston (35).

5. Ensemble selon la revendication 4, **caractérisé par** une quatrième garniture mécanique d'étanchéité (40) avec un anneau glissant rotatif (41) et un anneau glissant stationnaire (42) qui définissent entre eux une fente étanche (43), un quatrième espace d'étanchéité (44) et un quatrième ensemble de piston (45) avec un élément de piston (46) et des zones de paroi (47, 48) flexibles qui définissent un quatrième espace intérieur de piston (460), dans lequel la quatrième garniture mécanique d'étanchéité (40) est agencée entre le troisième espace d'étanchéité (34) et le quatrième espace d'étanchéité (44) et le quatrième espace intérieur de piston (460) est en liaison fluidique avec le quatrième espace d'étanchéité (44), et un quatrième dispositif de précontrainte (49) exerce une quatrième force de précontrainte (F4) sur le quatrième ensemble de piston (45).

6. Ensemble selon l'une des revendications précédentes, comprenant en outre une douille de boîtier (8) avec au moins une ouverture (9) qui entoure la zone environnante (6), dans lequel l'ouverture (9) fournit une liaison avec un côté extérieur de la douille de boîtier (8).

7. Dispositif de pompage pour puits de forage, en particulier pour le pompage de milieux contenant de l'huile, comprenant :
- un entraînement électrique (2),
- une pompe (3) qui est reliée à l'entraînement électrique (2) par le biais d'un arbre d'entraînement (4), et
- un ensemble garniture mécanique d'étanchéité (5) selon l'une des revendications précédentes, qui est agencé au niveau de l'arbre d'entraînement (4).

8. Dispositif de pompage pour puits de forage selon la revendication 7, comprenant une douille de boîtier (8) avec au moins une ouverture (9) qui entoure l'ensemble garniture mécanique d'étanchéité (1).
